# EUROPÄISCHE PATENTANMELDUNG

(11) **EP 4 474 752 A2**
(43) Veröffentlichungstag der Anmeldung: **11.12.2024**
(21) Anmeldenummer: 24178173.1
(22) Anmeldetag: 27.05.2024
(51) Int. Cl.: F41G 7/00, G01J 5/90, F41G 7/22, G01J 5/54

(54) **SUCHKOPFMESSSYSTEM UND MESSVERFAHREN ZUR OPTISCHEN VERMESSUNG EINES SUCHKOPFS**

(30) Priorität: 06.06.2023 DE 102023002291
(71) Anmelder: Diehl Defence GmbH & Co. KG, 88662 Überlingen (DE)
(72) Erfinder: Münzhuber, Franz, 78315 Radolfzell am Bodensee (DE)
(74) Vertreter: Diehl Patentabteilung

(57) **Zusammenfassung**

Die Erfindung betrifft ein Suchkopfmesssystem (40, 44) mit einem Suchkopf (6) für ein Fluggerät zur Erkennung von Zielen, der einen Detektor (24), eine Suchkopfoptik (16) zur Lenkung von durch ein Eingangsfenster (22) einfallender Infrarotstrahlung auf den Detektor (24) und eine Auswerteeinheit (28) zur Erkennung der Ziele aus Detektordaten umfasst.

Um Ziele zuverlässiger erkennen zu können, wird vorgeschlagen, dass das Suchkopfmesssystem (40, 44) eine Infrarotlichtquelle (32), eine Einkoppeloptik (38) zum Einkoppeln von Infrarotstrahlung aus der Infrarotlichtquelle (32) in den Strahlengang der Suchkopfoptik (16) und einen durchstimmbaren Spektralfilter (34) zum Durchstimmen der aus der Infrarotlichtquelle (32) auf den Detektor (24) geleiteten Infrarotstrahlung umfasst.

## Beschreibung

Die Erfindung betrifft ein Suchkopfmesssystem mit einem Suchkopf für ein Fluggerät zur Erkennung von Zielen, der einen Detektor, eine Suchkopfoptik zur Lenkung von durch ein Eingangsfenster einfallender Infrarotstrahlung auf den Detektor und eine Auswerteeinheit zur Erkennung der Ziele aus Detektordaten umfasst.

Lenkflugkörper oder andere unbemannte Fluggeräte, wie Drohnen, zur Erkennung von Zielen verfügen oft über einen Suchkopf, welcher elektromagnetische Strahlung der Ziele im mittleren Infrarotbereich, also zwischen 3 µm und 5 µm, detektiert. Aus der räumlichen Position eines Ziels wird Lenkinformation zum Lenken des Fluggeräts zum Ziel hin ermittelt. Für die Optimierung der Leistungsfähigkeit eines Suchkopfs ist die Wahl des spektralen Passbands beziehungsweise Detektorbands im mittleren Infrarotbereich ein wichtiger Systemparameter. Entsprechend sind die Empfindlichkeit des Detektors und die Durchlässigkeit der Suchkopfoptik so zu wählen, dass Strahlung im gewünschten Passband oder in mehreren gewünschten Passbändern und möglichst nur dort detektiert wird. Wird das Passband zu eng gewählt, verringert sich die detektierbare Strahlung des Ziels und die Rauschbeiträge der Elektronik steigen proportional an. Wird der Bereich zu groß gewählt, so erhöht sich der Anteil an nicht vom Ziel kommender Strahlung und der relative Strahlungsbeitrag des Ziels verringert sich.

Während des Flugs eines Fluggeräts, insbesondere bei Langstreckenflügen, kann sich die Temperatur im Suchkopf verändern, sodass mehr oder weniger Wärmestrahlung in den Strahlengang der Suchkopfoptik gelangt. Bei einem während des Flugs gekühlten Detektor kann sich die Temperaturfluktuation negativ auf die Sensitivität des Detektors auswirken, sodass das Ziel nicht mehr zuverlässig erkannt wird.

Es ist eine Aufgabe der vorliegenden Erfindung, ein Suchkopfmesssystem anzugeben, mit dessen Hilfe Ziele zuverlässiger erkannt werden können. Diese Aufgabe wird durch ein Suchkopfmesssystem der eingangs genannten Art gelöst, das erfindungsgemäß eine Infrarotlichtquelle, eine Einkoppeloptik zum Einkoppeln von Infrarotstrahlung aus der Infrarotlichtquelle in den Strahlengang der Suchkopfoptik und einen durchstimmbaren Spektralfilter zum Durchstimmen der aus der Infrarotlichtquelle auf den Detektor geleiteten Infrarotstrahlung aufweist. Mittels der Infrarotlichtquelle kann Licht mit bekannter Intensität im Spektralbereich des Passbands auf den Detektor geleitet werden. Aus den aus der Bestrahlung resultierenden Daten des Detektors kann die Sensitivität des Detektors ermittelt werden. Der Detektor kann kalibriert werden. Mithilfe des Spektralfilters kann diese Sensitivitätsermittlung spektralabhängig durchgeführt werden, also für mehrere Frequenzen beziehungsweise Frequenzbänder.

Je nach Anwendung kann nur die Sensitivität des Detektors ermittelt werden oder die Sensitivität des gesamten optischen Systems aus Suchkopfoptik, Eingangsfenster, wie ein Dom, und Detektor. Ebenfalls je nach Anwendung kann die Ermittlung der Sensitivität vor oder während eines Flugs des Fluggeräts ausgeführt werden. Während des Flugs ist die Ermittlung der Sensitivität des Detektors von besonderem Vorteil. Mit Hilfe der Infrarotlichtquelle kann eine kontinuierliche oder wiederholte Kalibrierung des Detektors während des Flugs erfolgen. Damit können Schwankungen von einem oder mehreren Betriebsparametern, wie Temperatur und/oder eine oder mehrere Spannungen, durch einen insbesondere wiederholten Abgleich der radiometrischen Performance des Detektors gegen einen Standard, wie die Infrarotlichtquelle, erkannt oder sogar ausgeglichen werden. Vor einem Flug kann das Transmissionsverhalten des gesamten optischen Systems ermittelt werden. Mithilfe des Spektralfilters kann die spektrale Auflösung des Antwortverhaltens des Detektors ermittelt werden. Diese Konfiguration ermöglicht eine Überprüfung der Eigenschaften auf Systemebene, die wichtig für die Gesamtperformance des Suchkopfs ist. Bei Abweichungen der Messung von den gewünschten Werten des Suchkopfs können Ursachen analysiert und Maßnahmen getroffen werden. Beispielsweise kann ein Suchkopf - als solcher oder als Teil des Fluggeräts - nach einem Flug des Fluggeräts überprüft und ggf. repariert beziehungsweise neu eingestellt werden, sodass ein Zuverlässigkeit des Fluggeräts für lange Zeit gewährleistet bleibt. Es kann nur eine oder mehrere Infrarotlichtquellen vorhanden sein, beispielsweise eine innerhalb und eine außerhalb des Suchkopfs.

Die Infrarotlichtquelle strahlt zweckmäßigerweise im mittleren Infrarotbereich aus, insbesondere im Bereich zwischen 3 µm und 5 µm. Besonders günstig ist ein Abstrahlband mit einer spektralen Breite von 2σ > 1.000 nm. Hierdurch können auch Multispektralbandmessungen durchgeführt werden. Die Infrarotlichtquelle ist zweckmäßigerweise eine Punktlichtquelle, also mit einer räumlichen Abstrahlfläche unter 1 Quadratmillimeter. Das Passband ist zweckmäßigerweise der spektrale Bereich, in dem der Suchkopf sensitiv ist. Außerhalb des Passbands ist der Suchkopf zweckmäßigerweise nicht sensitiv. Das Passband kann mehrere auch spektral voneinander getrennte Spektralbereiche umfassen, also mit unsensitiven Bereichen dazwischen. Das Fluggerät kann ein Remote Carrier sein, wie ein Lenkflugkörper, eine Drohne oder ein anderes unbemanntes Fluggerät, das vorteilhafterweise einen Wirkkörper zur Bekämpfung eines Ziels aufweist.

Der Suchkopf dient zur Erkennung von Zielen. Das Erkennen kann eine Aufklärung eines Ziels, das Erfassen eines Ziels und/oder das Verfolgung eines Ziels umfassen. Der Detektor ist vorteilhafterweise ein bildgebender Detektor, beispielsweise ein Matrixdetektor. Der Spektralfilter weist einen spektralen Transmissionsbereich auf. Innerhalb des Transmissionsbereichs liegt das Filterband des Spektralfilters, das von undurchlässigen Spektralbereichen umgeben ist und innerhalb des Transmissionsbereichs durchstimmbar ist. Das Durchstimmen beinhaltet ein Ändern der Frequenz des Filterband beziehungsweise ein frequenzbezogenes Ändern des transmissiven Frequenzbereichs. Das Filterband kann hierdurch im Spektrum verschoben werden. Das Ändern geschieht zweckmäßigerweise durch mehrere Frequenzen/Frequenzbänder. Das Durchstimmen erfolgt insbesondere durch das gesamte Passband des Suchkopfs. Das Durchstimmen kann kontinuierlich oder sprungweise erfolgen. Spektralfilter und Passband sind vorteilhafterweise so aufeinander abgestimmt, dass der 2σ-Bereich des Passbands mindestens 3x so groß wie der 2σ-Bereich des Filterbands ist, insbesondere mindestens 5x so groß.

Die Einkoppeloptik dient zum Ein- und Ausblenden der Strahlung der Infrarotlichtquelle in das Sichtfeld des Detektors. Sie kann im Suchkopf oder außerhalb des Suchkopfs angeordnet sein, je nach Anwendung der Messung. Ist sie im Suchkopf angeordnet, kann sie eine bewegliche Mechanik aufweisen, wie einen Klappspiegel, die das Ein- und Ausblenden bewirkt. Ist die Einkoppeloptik außerhalb des Suchkopfs, so koppelt sie die Infrarotstrahlung der Infrarotlichtquelle außerhalb des Suchkopfs in das Sichtfeld des Detektors. Sie kann ein Gerät zum definierten Vorschalten vor den Suchkopf sein.

In einer vorteilhaften Ausführungsform der Erfindung sind die Infrarotlichtquelle und die Einkoppeloptik im Suchkopf angeordnet. Hierdurch kann eine Detektormessung während eines Flugs des Fluggeräts erfolgen. Die Einkoppeloptik kann einen Einkoppelspiegel aufweisen, der ein Klappspiegel sein kann mit einer Stellung zum Einblenden und einer zum Ausblenden der Infrarotstrahlung von der Infrarotlichtquelle auf den Detektor. Vorteilhafterweise ist der Strahlengang so gestaltet, dass die Einkoppeloptik in der Einkoppel- beziehungsweise Einblendstellung, also bei einer Bestrahlung des Detektors mit der Strahlung von der Infrarotlichtquelle, den Strahlengang von außen zum Detektor unterbricht. Der Detektor wird ausschließlich mit Strahlung der Infrarotlichtquelle bestrahlt, abgesehen von eventueller unerwünschter Strahlung aus dem Suchkopf selbst. Die Einkoppeloptik kann einen selektiven Spiegel enthalten, sodass die Außenszene vor dem Suchkopf bei der Vermessung verdunkelt ist.

Die Anordnung der Einkoppeloptik im Strahlengang kann dem Zweck der Messung angepasst sein. Soll der Detektor bereichsweise vermessen werden, so kann eine scharfe Abbildung der Infrarotlichtquelle auf dem Detektor sinnvoll sein. Die Einkoppeloptik, z.B. der Spiegel, kann in Strahlungsrichtung hinter einer Zwischenbildebene angeordnet sein, zweckmäßigerweise so, dass die Lichtquelle in der Zwischenbildebene angeordnet ist beziehungsweise parallel dazu im Beleuchtungsstrahlengang vor der Einkopplung. Soll der Detektor insgesamt von der Infrarotlichtquelle beleuchtet werden, so kann es sinnvoll sein, die Infrarotlichtquelle unkollimiert in einen kollimierten Teil des Strahlengangs einzukoppeln. Die Infrarotlichtquelle wird unscharf auf dem Detektor abgebildet, zweckmäßigerweise so, dass ihr "Bild" die gesamte Detektorfläche überdeckt.

In einer anderen Ausführungsform sind die Infrarotlichtquelle und die Einkoppeloptik außerhalb des Suchkopfs angeordnet. Die Strahlung der Infrarotlichtquelle kann vor dem Eingangsfenster in den Strahlengang der Suchkopfoptik eingekoppelt werden. Das Einkoppeln kann beispielsweise erfolgen, dass die Infrarotlichtquelle oder ein Gerät mit der Infrarotlichtquelle im Gesichtsfeld des Suchkopfs angeordnet ist, sodass sie das Eingangsfenster des Suchkopfs bestrahlt. Das Einkoppeln kann hier so verstanden werden, dass die Infrarotlichtquelle beziehungsweise deren Gerät die hinter ihr liegende Objektszene verdeckt und z.B. anstelle von ihr das Eingangsfenster beleuchtet. Bei diesem Aufbau kann die Transmission des gesamten optischen Systems einschließlich Eingangsfenster bis zum Detektor gemessen werden, insbesondere mithilfe des spektral durchstimmbaren Spektralfilters spektral abhängig.

Es kann ein Messstand erstellt werden zur Überprüfung beziehungsweise Vermessung des optischen Systems einschließlich Eingangsfenster und Detektor.

Beide Anordnungen können kombiniert werden. So ist ein Suchkopf mit interner Infrarotlichtquelle zur internen Vermessung der Empfindlichkeit des Detektors sinnvoll. Ein solcher Suchkopf kann auch von außen mit einer weiteren Infrarotlichtquelle beleuchtet werden. Mithilfe der externen Infrarotlichtquelle kann die Transmission des optischen Systems einschließlich Eingangsfenster und Detektor vermessen werden. Ohne interne Infrarotlichtquelle geschieht das in Kombination mit der Empfindlichkeit des Detektors. Mit interner Infrarotlichtquelle kann die Transmission des optischen Systems unabhängig von der Empfindlichkeit des Detektors vermessen werden, da diese bekannt ist und herausgerechnet werden kann. Das optische System mit Eingangsfenster und Suchkopfoptik kann getestet und verbessert werden. Dies ist sowohl vor der Auslieferung des Suchkopfs beziehungsweise Fluggeräts als auch nach einem Einsatz des Suchkopfs beziehungsweise Fluggeräts sinnvoll, beispielsweise nach einem Patrouillenflug des Fluggeräts. Insofern können interne Messung, externe Messung und kombinierte Messung gleichermaßen vorteilhaft eingesetzt werden, z.B. zur Kalibrierung des Suchkopfs oder eines Teils davon.

Die Durchstimmbarkeit des Spektralfilters kann erreicht werden, wenn der Spektralfilter ein spektral durchstimmbarer Fabry-Perot-Filter ist. Nach dem Prinzip des Fabry-Perot-Spektrometers kann die Transmission des Filters spektral abhängig eingestellt werden, sodass nur ein Filterband aus dem Leuchtspektrum der Infrarotlichtquelle den Filter passieren kann und die anderen Bereiche des Leuchtspektrums herausgefiltert werden. Zweckmäßigerweise ist die spektrale Lage des Filterbands kontinuierlich verstellbar, beispielsweise durch die kontinuierliche Abstandsveränderung von Fabry-Perot-Platten des Filters. Diese kann durch ein Piezosystem erreicht werden, das Spannungsänderungen in Abstandsänderungen umwandelt.

Die Anforderungen an die Infrarotlichtquelle sind vorteilhafterweise eine möglichst hohe Strahlungsleistung, eine kleine Abstrahlfläche und ein breites 2σ-Leuchtspektrum, sodass der Detektor und/oder das optische System über ein breites Spektrum vermessen werden können, insbesondere über das gesamte Passband des Suchkopfs. Diese Vorteile können mit einer Infrarotlichtquelle erreicht werden, die eine Interbandkaskaden-LED ist. Mittels eines entsprechenden epitaktischen Schichtdesigns in emittierenden Medien kann die Infrarotlichtquelle an die gewünschten spektralen Anforderungen der Suchkopfvermessung angepasst werden.

Zur Kalibrierung des optischen Systems aus Suchkopfoptik und Eingangsfenster ist die Kenntnis der Strahlungsleistung der Infrarotlichtquelle nötig, insbesondere in spektraler Abhängigkeit. Diese kann vor der Vermessung des Suchkopfs ermittelt werden, beispielsweise durch Bestrahlung eines kalibrierten IR-Detektors, und dann bei der Vermessung verwendet werden. Genauer jedoch ist es, einen zum Detektor zusätzlichen, kalibrierten Infrarotdetektor in den Strahlengang vor der Suchkopfoptik anzuordnen. Der kalibrierte Infrarotdetektor und das optische System können zeitgleich beleuchtet werden, sodass die Daten des kalibrierten Infrarotdetektors zur Vermessung beziehungsweise Kalibrierung des optischen Systems und/oder des Detektors verwendet werden können. Zweckmäßigerweise ist der kalibrierte Infrarotdetektor spektral durchstimmbar, sodass die Strahlungsleistung der Infrarotlichtquelle in Abhängigkeit von der Frequenz des aktuellen Filterbands, beispielsweise des Maximums des Filterbands, ermittelt werden kann. Auf diese Weise kann auch der Spektralfilter überprüft beziehungsweise kalibriert werden.

Zur Vermessung der gesamten Detektorfläche in einer Messung ist es vorteilhaft, wenn die Infrarotlichtquelle so in den Strahlengang eingebunden ist, dass sie die gesamte sensitive Detektorfläche bestrahlt. Das kann erreicht werden, wenn die Infrarotlichtquelle, die Einkoppeloptik und der Strahlengang so zueinander angeordnet sind, dass die Infrarotlichtquelle unkollimiert in einen kollimierten Strahlengangbereich einstrahlt.

Soll der Detektor flächenbereichsweise vermessen werden, so kann die Einkoppeloptik so beweglich angeordnet sein, beispielsweise zum Eingangsfenster oder einem anderen starren Element des Suchkopfs, dass der Detektor bereichsweise selektiv bestrahlbar ist. Hierfür bestrahlt die Infrarotlichtquelle die Detektorfläche zweckmäßigerweise nur bereichsweise, insbesondere nur detektorelementweise. Die Einkoppeloptik lenkt diese Bestrahlung nacheinander auf verschiedene Bereiche des Detektors, sodass diese Vermessen werden können. Diese Ausführungsform ist sowohl mit interner als auch mit externer Infrarotlichtquelle sinnvoll. Bei externer Infrarotlichtquelle kann diese kollimiert auf den Suchkopf gerichtet werden, wobei die Einkoppeloptik die Infrarotlichtquelle beziehungsweise deren Strahlungsrichtung gegenüber dem Suchkopf bewegt. Bei interner Infrarotlichtquelle kann diese in einer parallelen Zwischenbildebene bewegt werden.

Die Erfindung ist außerdem gerichtet auf ein Messverfahren zur optischen Vermessung eines Suchkopfs für ein Fluggerät zur Erkennung von Zielen, bei dem Infrarotstrahlung aus einer Infrarotlichtquelle durch eine Einkoppeloptik in den Strahlengang einer Suchkopfoptik eingekoppelt und auf einen Detektor gelenkt wird und eine Auswerteeinheit Detektordaten auswertet.

Es ist eine Aufgabe der vorliegenden Erfindung, ein Messverfahren anzugeben, durch dessen Ausführung Ziele zuverlässiger erkannt werden können. Diese Aufgabe wird durch ein oben angeführtes Messverfahren gelöst, bei dem erfindungsgemäß die Infrarotstrahlung mit einem durchstimmbaren Spektralfilter in seiner Frequenz durchgestimmt wird und die Detektordaten in Abhängigkeit von der Frequenz ausgewertet werden. Je nach Ausführung kann entweder der Detektor vermessen und ggf. kalibriert werden oder das optische System mit Suchkopfoptik und Eingangsfenster oder Detektor und System gemeinsam.

Bei einer Vermessung während eines Flugs des Fluggeräts kann Infrarotstrahlung von der Infrarotlichtquelle spektral selektiv auf den Detektor geleitet werden. Aus dem Antwortsignal des Detektors kann eine Referenz abgeleitet werden, gegen die ein Signal abgeglichen werden kann, das durch Infrarotstrahlung aus der das Fluggerät umgebenden Objektszene erzeugt wurde. Der Detektor kann während des Flugs kalibriert werden, wodurch ein Ziel zuverlässiger erkannt werden kann. Es ist insofern vorteilhaft, wenn während des Flugs des Fluggeräts eine Empfindlichkeit des Detektors in Abhängigkeit von der Frequenz ermittelt wird, mit der der Detektor beleuchtet wird, beispielsweise der Zentralfrequenz des Filterbands des Spektralfilters. Die Empfindlichkeit kann anhand von Strahlung der Infrarotlichtquelle auf den Detektor ermittelt werden.

Der Suchkopf kann zur Aufklärung und/oder einer Erfassung eines Ziels betrieben werden. Auch möglich ist eine Aufklärung vor einer Erfassung. Die Erkennung kann die Aufklärung, das Erfassen und/oder das Verfolgen beinhalten. Mit dem beschriebenen Verfahren kann eine wiederholte oder kontinuierliche Kalibrierung des Detektors während des Flugs des Fluggeräts erfolgen. Auch möglich ist die Kalibrierung des optischen Systems vor dem Flug. Während des Flugs können Schwankungen eines Sensitivitätsparameters des Detektors erkannt werden. Die Erkennung kann aus einer wellenlängenabhängigen bekannten Sollabstrahlung der Infrarotlichtquelle abgeleitet werden oder aus den Daten eines zusätzlichen, kalibrierten Detektors.

Während eines längeren Flugs kann das Fluggerät zur Überwachung und/oder Aufklärung von Zielen verwendet werden. Dies kann anhand des Suchkopfs über einen längeren Zeitraum geschehen. Durch Temperaturfluktuationen kann die Empfindlichkeit des Detektors ebenfalls fluktuieren, sodass eine fortlaufende oder wiederholte Messung der Empfindlichkeit zweckmäßig ist. Bei einer Wiederholung der Messung ist es vorteilhaft, wenn sich Messung des Detektors und Erkennung eines Ziels abwechseln. Das Ziel kann quasikontinuierlich aufgeklärt oder verfolgt werden bei ebenfalls fortlaufender Kalibrierung des Detektors. Die Erkennung des Ziels kann unter Verwendung der Messdaten der jeweils letzten Messung erfolgen. Je nach Auftrag kann die Erkennung ausschließlich anhand der Messdaten der letzten Messung oder unter Verwendung weiterer Messdaten erfolgen.

Während eines Flugs ist es unwahrscheinlich, dass einzelne Elemente oder Teilbereiche des Detektors beschädigt werden, sodass eine Zielerkennung hierdurch beeinträchtigt wäre. Eine Kalibrierung ist daher vorteilhaft über die gesamte Fläche des Detektors. Hierzu beleuchtet die Infrarotlichtquelle zweckmäßigerweise die gesamte empfindliche Fläche des Detektors durch die Suchkopfoptik. Beispielsweise strahlt die Infrarotlichtquelle unkollimiert in einen kollimierten Teil des Strahlengangs innerhalb der Suchkopfoptik.

Zur Steigerung der Zuverlässigkeit einer Zielerkennung kann das Ziel auf zwei oder mehr spektral verschiedenen Kanälen aufgenommen werden und die beiden oder mehr Ergebnisse können in eine Beziehung gesetzt werden, beispielsweise durch Subtraktion der Ergebnisse voneinander. Hierfür wird ein zumindest bispektraler Suchkopf mit zumindest zwei Spektralbereichen eingesetzt. Die Spektralbereiche können durch einen ausgesparten Zwischenspektralbereich voneinander getrennt sein. Der Detektor ist zweckmäßigerweise ein bi- oder multispektraler Detektor oder sein empfindlicher Bereich deckt die mehreren Spektralbereiche ab. Zur weiteren Steigerung der Erkennungszuverlässigkeit ist es vorteilhaft, wenn beide Spektralbereiche kalibriert werden. Dann kann die Auswerteeinheit beide Spektralbereiche in Abhängigkeit von einer jeweils in beiden Spektralbereichen ermittelten Empfindlichkeit des Detektors getrennt auswerten. Die Empfindlichkeit kann in beiden Bereichen verschieden sein. Es kann ein Vergleich von Detektorsignalen zumindest zweier voneinander getrennter Spektralbereiche gegen einen durch die Infrarotlichtquelle festgelegten Standard erfolgen.

Eine weitere wichtige Größe des Suchkopfs ist sein Auflösungsvermögen oder seine Point Spread Function, insbesondere spektralabhängig. Diese ist zweckmäßigerweise durch eine externe Infrarotlichtquelle zu messen, also insbesondere vor einem Flug des Fluggeräts oder vor einem Einsetzen des Suchkopfs in das Fluggerät. Hierfür ist es zweckmäßig, bereichsweise, also nicht zugleich über die ganze Detektorfläche, zu messen. Die Lichtquelle kann hierzu scharf auf den Detektor abgebildet werden. Ist die Sollgröße und Sollgeometrie der Abbildung bekannt, insbesondere im Verhältnis zu den Detektorelementen, so kann aus dem Signal des Detektors die Auflösung des Suchkopfs beziehungsweise die Point Spread Function des bestrahlten Bereichs ermittelt werden, z.B. durch die Modulations Transfer Funktion. Durch beispielsweise Abbildungsfehler ist die Istgröße der Abbildung, die durch das Signal des Detektors ermittelbar ist, kleiner als die Sollgröße. Und die Istgeometrie kann anders als die Sollgeometrie sein. Die bereichsweise Abbildung kann durch eine Bewegung der Einkoppeloptik hergestellt werden, der Detektor kann in mehreren verschiedenen Bereichen selektiv bestrahlt werden.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Lenkflugkörper im Anflug auf ein Ziel,
- FIG 2: einen Suchkopf des Lenkflugkörpers,
- FIG 3: eine Messeinrichtung im optischen System des Suchkopfs,
- FIG 4: eine andere Anordnung einer Messeinrichtung im optischen System und
- FIG 5: einen Messstand zum Kalibrieren eines Suchkopfs.

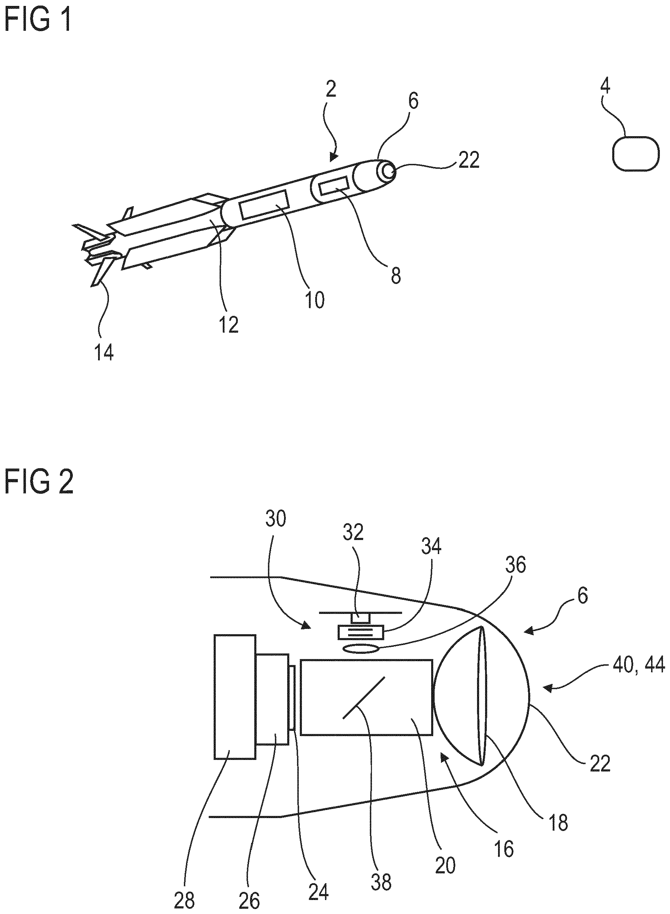

FIG 1 zeigt ein Fluggerät 2 in Form eines Lenkflugkörpers im Anflug auf ein Ziel 4. Das Fluggerät 2 kann auch eine Drohne oder ein anderes unbemanntes und lenkbares Fluggerät 2 sein. Das Ziel 4 kann ein Luftziel, Bodenziel oder Seeziel sein, ein Fahrzeug am Boden, zur See oder in der Luft oder ein anderes Ziel 4 sein. Alternativ kann sich das Fluggerät 2 in einem Aufklärungsflug befinden, um ein Ziel 4 zu erkunden, oder in einer Zielerfassung, um das Ziel 4 zu erfassen und anschließend zu verfolgen. In diesem Zusammenhang wird der Begriff der Erkennung von Zielen 4 für die Aufklärung, Erfassung und Verfolgung gleichermaßen verwendet. Der Flug kann ein eigenständiger Flug oder getragen an einer Plattform sein. Auch ein Zustand am Boden, beispielsweise zur Wartung oder Herstellung einer Einsatzbereitschaft ist möglich, wobei das Fluggerät 2 auch hier zur Erkennung von Zielen 4 dient.

Das Fluggerät 2 ist mit einem Suchkopf 6, einer Steuereinheit 8 zur Flugsteuerung, einem Wirkkörper 10 zur Zerstörung des Ziels 4, einem Antrieb 12, wie einem Raketenantrieb oder einem Luft atmenden Antrieb, und Lenkelementen 14 ausgestattet, wie Lenkflügeln oder Lenkdüsen. Ist das Fluggerät 2 eine Drohne oder eine andere fliegende Plattform, so kann der Wirkkörper 10 in einem eigenständigen Lenkflugkörper sein, der von der Plattform startet.

FIG 2 zeigt den Suchkopf 6 des Fluggeräts 2 in einer schematischen Darstellung. Der Suchkopf 6 enthält eine Suchkopfoptik 16 mit einem Fangspiegel 18 und optischen Elementen 20, die mit dem Fangspiegel 18 den optischen Pfad für einen Strahlengang für Strahlung bilden, die durch ein Eingangsfenster 22, wie einem Dom, durch den Strahlengang zu einem Detektor 24 geführt werden. Die optischen Elemente 20 sind nur schematisch dargestellt. Die Suchkopfoptik 16 bildet zusammen mit dem Eingangsfenster 22 das optische System des Suchkopfs 6. Der Detektor 24 ist ein Infrarotdetektor auf einem Kühler 26. Er ist mit einer Auswerteeinheit 28 verbunden, die die Signale des Detektors 24 auswertet.

Während eines Flugs des Fluggeräts 2, beispielsweise zur Aufklärung von Zielen 4, wird der Detektor 24 vom Kühler 26 gekühlt und er empfängt Infrarotstrahlung, die aus einer Objektszene vor dem Fluggerät 2 durch die Suchkopfoptik 16 auf den Detektor 24 geleitet wird. Durch einen schnellen Flug, Sonneneinstrahlung oder andere thermische Einflüsse kann es zu Wärmeentwicklung innerhalb des Suchkopfs 6 kommen oder zu unerwünschter Wärmeeinstrahlung von außen, die auf den Detektor 24 geführt wird und diesen erwärmt. Hierdurch können ein Rauschverhalten oder andere bildgestaltende Parameter des Detektors 24 erheblich verändert werden, sodass Ziele 4 gut oder weniger gut erkennbar sind. Diese Einflüsse können spektral verschieden sein, sodass ein Spektralbereich deutlich mehr gestört ist als ein anderer. Die Erkennung von Zielen 4 kann hierdurch erheblich erschwert werden.

Um das Antwortverhalten des Detektors 24 auf eintreffende Infrarotstrahlung zu messen und ggf. den Detektor 24 kalibrieren zu können, ist der Suchkopf 6 mit einer Messeinrichtung 30 ausgestattet, die eine Infrarotlichtquelle 32 aufweist. Die Infrarotlichtquelle 32 ist eine LED-Lichtquelle auf dem Konzept der Interbandkaskadenstruktur, die ein Leuchtspektrum mit einer 2σ-Bandbreite zwischen 3 µm und 6 µm aufweist. Damit kann das gesamte Passband des Suchkopfs 6 beleuchtet werden, das zwischen 3 µm und 5 µm liegt. Die Leuchtfläche der LED beträgt 0,25 mm x 0,25 mm und ist damit ausreichend klein, um als scharf abgebildete Punktlichtquelle kleine Flächenbereiche des Detektors 24 selektiv beleuchten zu können.

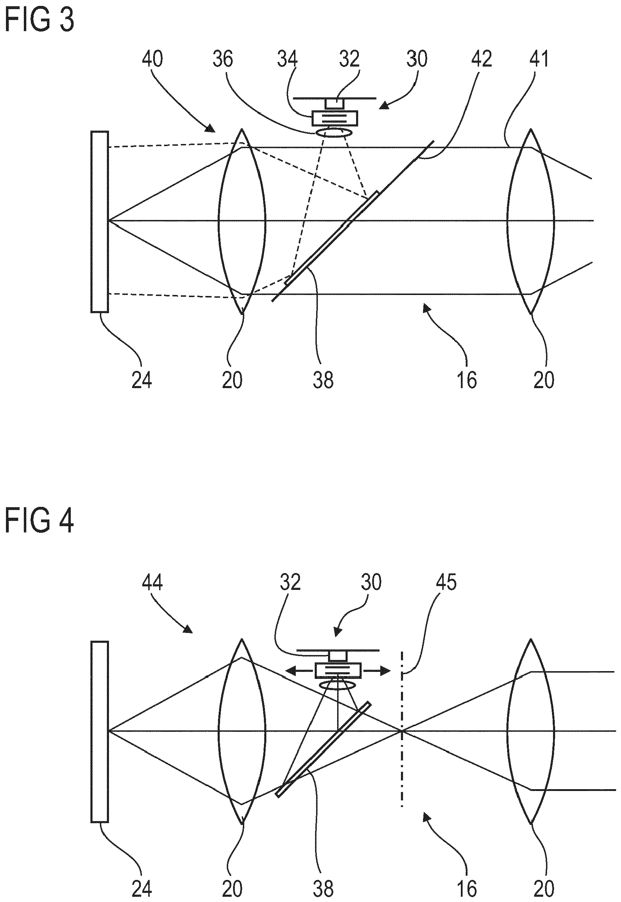

Zusätzlich kann die Messeinrichtung 30 einen spektral durchstimmbaren Spektralfilter 34 enthalten, um die Strahlung aus der Infrarotlichtquelle 32 in ihrer spektralen Breite vom Leuchtspektrum der Infrarotlichtquelle 32 auf ein Filterband des Spektralfilters 34 zu reduzieren. Die spektrale Breite, also 2σ-Breite, des Filterbands beträgt weniger als 1/10 der 2σ-Breite des Passbands des Suchkopfs 6. Die spektrale Lage des Filterbands kann durch das Durchstimmen im Spektrum verschoben werden, zweckmäßigerweise über den gesamten Bereich des Passbands des Suchkopfs 6, also dem spektralen Bereich, in dem der Suchkopf 6 sensitiv ist. Der Spektralfilter 34 ist ein Fabry-Perot-Filter mit Fabry-Perot-Platten, die mittels einer Abstandsveränderung zueinander die spektrale Lage des Filterbands bestimmen. Mittels Piezoelementen kann der Abstand und damit die Lage kontinuierlich durchgestimmt werden. Eine Strahlformoptik 36 der Messeinrichtung 30 formt die aus dem Spektralfilter 34 austretende Strahlung so, dass sie mittels einer Einkoppeloptik 38 in gewünschter Form in den Strahlengang der Suchkopfoptik 16 eingekoppelt wird. Die Einkoppeloptik 38 kann einen Spiegel aufweisen, der ein Klappspiegel und/oder ein teildurchlässiger Spiegel sein kann. Als Klappspiegel verschließt er den Strahlengang der durch das Eingangsfenster 22 eintretenden Strahlung auf den Detektor 24. Als teildurchlässiger Spiegel erlaubt er das gleichzeitige Auftreffen von Strahlung vom Eingangsfenster 22 und der Infrarotlichtquelle 32 auf den Detektor 24. Suchkopf 6 und Messeinrichtung 30 bilden zusammen ein Suchkopfmesssystem 40, 44 zum Messen von spektralen Charakteristiken des Suchkopfs 6. Das Suchkopfmesssystem 40, 44 kann wie zu FIG 3 oder wie zu FIG 4 beschrieben ausgeführt sein.

FIG 3 zeigt die Messeinrichtung 30 im optischen System des Suchkopfs 6 mit der Infrarotlichtquelle 32, dem Spektralfilter 34, der Strahlformoptik 36 und der Einkoppeloptik 38. Vom optischen System sind optische Elemente 20 nur schematisch in Form eines Linsensystems dargestellt, das einen kollimierten Strahlengangbereich 41 formt. In diesem Strahlungsbereich ist die Einkoppeloptik 38 angeordnet, die die Strahlung der Infrarotlichtquelle 32 unkollimiert in den kollimierten Strahlengangbereich 41 einkoppelt. Infolgedessen wird die Infrarotlichtquelle 32 nicht scharf auf den Detektor 24 abgebildet, sondern beleuchtet dessen gesamte spektral sensitive Fläche, wie in FIG 3 anhand der gestrichelten Linien gezeigt ist. Mithilfe eines Verdunkelers 42, der durch den Spiegel oder eine weitere Einheit gebildet sein kann, wird der Strahlengang vom Eingangsfenster 22 zum Detektor 24 blockiert, sodass nur Strahlung von der Infrarotlichtquelle 32 auf den Detektor 24 fällt. Die Einkoppeloptik 38 mit Spiegel und Verdunkeler 42 sind in den Strahlengang hinein- und hinausbewegbar, sodass zwischen Strahlung von außerhalb des Suchkopfs 6, dem Erkennungsmodus, und von der Infrarotlichtquelle 32, dem Messmodus, auf den Detektor 24 ausgewählt werden kann.

Während des Flugs des Fluggeräts 2 wird der Strahlengang alternierend zwischen Erkennungsmodus und Messmodus hin- und hergeschaltet, beispielsweise durch das Ein- und Ausklappen des Spiegels in den Strahlengang der Suchkopfoptik 16, sodass zwischen den Erkennungsperioden, in denen des Ziel 4 erkannt wird, Messperioden gelegt werden. In diesen wird der Detektor 24 ausschließlich mit Strahlung von der Infrarotlichtquelle 32 beleuchtet. Die Signale des Detektors 24 im Messmodus können als Referenz für die Signale des Detektors 24 im Erkennungsmodus verwendet werden, wodurch der Detektor 24 kalibrierbar ist. Es können hierfür die Daten der letzten Messperiode verwendet werden, insbesondere nur von dieser. Abweichungen in den Signalen im Erkennungsmodus können von denen des Messmodus quantifiziert werden. Die Abweichungen können zur Korrektur der Signale im Erkennungsmodus verwendet werden. Ziele 4 können hierdurch zuverlässiger erkannt werden.

Dieses Verfahren kann für verschiedene Filterbänder wiederholt werden. Der Spektralfilter wird durchgestimmt, es wird also der Frequenzbereich des Filterbands mehrfach spektral verschoben, sodass die Messungen für verschiedene Frequenzbereiche durchgeführt werden können. Der Detektor 24 wird so jeweils für verschiedene Frequenzbereiche kalibriert.

Bei einem multispektralen Suchkopf 6 können zwei oder mehr Filterbänder des Spektralfilters auf zwei oder mehr Spektralbereiche im Passband des Suchkopfs 6 angepasst werden und alle Spektralbereiche können wie beschrieben vermessen werden. Jeder Spektralbereich bekommt seinen eigenen Kalibrationsdatensatz. Nun können, auch während des Flugs, die Daten beider Spektralbereiche unter Berücksichtigung der Kalibrationsdaten miteinander verglichen werden, sodass Detektorfluktuationen, hervorgerufen z.B. durch Temperaturschwankungen, Spannungsänderungen, in beiden Spektralbereichen bei der Auswertung der Zielerkennungsdaten berücksichtigt werden können. Schwankungen können durch diesen wiederholten Abgleich der radiometrischen Performance des Detektors gegen einen Kalibrationsstandard abgeglichen werden.

Bei einem teiltransmissiven Spiegel kann auf die Bewegung des Spiegels zwischen Erkennungsmodus und Messmodus verzichtet werden. Im Erkennungsmodus kann die Infrarotlichtquelle 32 ausgeschaltet sein, im Messmodus eingeschaltet. Durch das Einschalten wird ein Sprung der Messwerte erzeugt, der bildbereichweise gemessen werden kann, beispielsweise für jedes Detektorelement. Dieser Sprung bildet nun die Signale des Messmodus. Dieses Verfahren ist zweckmäßigerweise nur auf nicht übersteuerte Bereiche der Detektorfläche anzuwenden, in denen die Subtraktion des Erkennungssignals vom Messsignal tatsächlich zum Kalibrationssignal führt.

Übersteuerte Bereiche können von der Kalibration in dieser Messperiode ausgenommen werden, wobei sie dann in einer späteren Messperiode, in denen sie nicht übersteuert sind, gemessen werden.

In FIG 4 ist ein alternatives Suchkopfmesssystem 44 mit einem anderen Strahlengang dargestellt mit einer Zwischenbildebene 45 innerhalb der Suchkopfoptik 16. Die nachfolgende Beschreibung beschränkt sich im Wesentlichen auf die Unterschiede zum Ausführungsbeispiel aus FIG 3, auf das bezüglich gleich bleibender Merkmale und Funktionen verwiesen wird. Um nicht bereits Beschriebenes mehrfach ausführen zu müssen, sind generell alle Merkmale des vorangegangenen Ausführungsbeispiels im folgenden Ausführungsbeispiel übernommen, ohne dass sie erneut beschrieben sind, es sei denn, Merkmale sind als Unterschiede zu dem vorangegangenen Ausführungsbeispiel beschrieben.

Die Infrarotlichtquelle 32 ist in der Zwischenbildebene 45 angeordnet, jedoch nicht räumlich in der dargestellten, sondern in einer parallelen, sodass ihre Strahlen durch die Einkoppeloptik 38 so geführt werden, als läge die Infrarotlichtquelle 32 in der Zwischenbildebene 45. Auch die Strahlspreizung ist identisch wie die des Strahlengangs der Suchkopfoptik 16 in der Zwischenbildebene 45, sodass die Strahlung aus der Infrarotlichtquelle 32 identisch geformt ist, wie der Strahlengang der Suchkopfoptik 16. Bei dieser Konfiguration wird die Infrarotlichtquelle 32 scharf auf den Detektor 24 abgebildet, sie beleuchtet also nur den Bereich der sensitiven Detektorfläche, der ihrer Größe im Zwischenbild entspricht. Selbstverständlich sind auch Zwischenpositionen zwischen den Konfigurationen aus FIG 3 und FIG 4 möglich, sodass die Infrarotlichtquelle 32 zwar nicht scharf auf den Detektor 24 abgebildet wird, aber auch nicht seine ganze sensitive Fläche beleuchtet, sondern nur einen Teilbereich davon.

Eine Kalibrierung des Detektors 24 kann nun bereichsweise erfolgen, wobei jeweils der beleuchtete Teilbereich vermessen wird. Zum Durchfahren der Beleuchtungsfläche über die gesamte sensitive Fläche ist die Messeinrichtung 30 in der Zwischenbildebene 45 bewegbar, wie in FIG 4 durch die Pfeile angedeutet ist. Entsprechend der Verschiebung der Infrarotlichtquelle 32 in der Zwischenbildebene 45 wird der beleuchtete Bereich auf der sensitiven Fläche verschoben, sodass seine Lage frei wählbar ist. Bei dieser Variante kann die Infrarotlichtquelle 32 weniger lichtstark sein als bei der aus FIG 3. Zudem ist eine bereichsweise Auflösungsmessung des Detektors 24 möglich beziehungsweise seine Point Spread Function hinsichtlich der Zwischenbildebene 45.

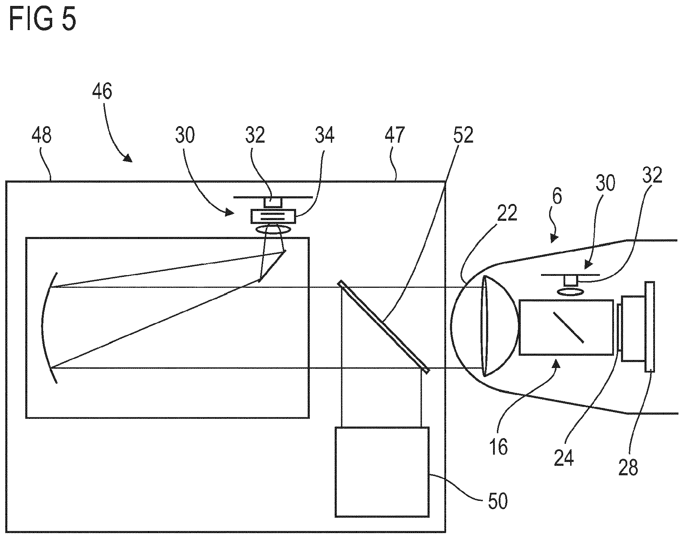

Beide Ausführungen aus FIG 3 und FIG 4 eignen sich besonders für die Vermessung des Detektors 24 während des Flugs des Fluggeräts 2. Demgegenüber ist die Ausführung aus FIG 5 für eine Vermessung am Boden vorgesehen. FIG 5 zeigt ein Suchkopfmesssystem 46 aus einen Messstand 47 und dem Suchkopf 6. Der Messstand 47 enthält eine Messeinrichtung 30, einen Kollimator 48 und einen kalibrierten Infrarotdetektor 50. Der Aufbau unterscheidet sich von den vorhergehenden durch eine Infrarotlichtquelle 32 in der Messeinrichtung 30 außerhalb des Suchkopfs 6, wobei sie alternativ zur Infrarotlichtquelle 32 im Suchkopf 6 oder zusätzlich vorhanden sein kann. Beispielsweise ist eine Messeinrichtung 30 sowohl im Suchkopf 6 vorhanden als auch im Messstand 47 vor dem Suchkopf 6. Hierbei kann der Strahlengang im Suchkopf 6 und die interne Messeinrichtung 30 so aufgebaut sein, wie in FIG 3, bei dem die Infrarotlichtquelle 32 die ganze sensitive Detektorfläche beleuchtet.

Demgegenüber wird die externe Infrarotlichtquelle 32 im Messstand 47 scharf auf dem Detektor 24 des Suchkopfs 6 abgebildet. Hierfür kollimiert der Kollimator 48 die Strahlung der Infrarotlichtquelle 32 und führt sie kollimiert auf das Eingangsfenster 22. Die Messeinrichtung 30 ist so ausgelegt, dass der Öffnungswinkel der Emission zu den geometrischen Bedingungen des Kollimators 48 passt. Durch die Kollimation wird der gleiche Strahlengang zum Suchkopf 6 hin erzeugt, wie bei Strahlung aus einem weit entfernten Ziel 4 erzeugt wird, das ebenfalls scharf auf dem Detektor 24 abgebildet wird. Mittels eines halbtransparenten Spiegels 52 wird ein Teil der Strahlung in den kalibrierten Infrarotdetektor 50 geführt. Der unkalibrierte Detektor 24 und der kalibrierte Infrarotdetektor 50 werden also beide zugleich von der Infrarotlichtquelle 32 beleuchtet.

Der kalibrierte Infrarotdetektor 50 enthält neben einem Detektor auch einen spektral durchstimmbaren und kalibrierten Spektralfilter, der wie der Spektralfilter 34 oder anders aufgebaut sein kann. Mit dem kalibrierten Spektralfilter kann die spektrale Einstellung des Filterbands des Spektralfilters 34 überprüft werden. Aus den Daten des kalibrierten Infrarotdetektors 50 kann die Intensität der Strahlung aus der Infrarotlichtquelle 32 ermittelt werden und daraus die Intensität der auf das Eingangsfenster 22 auftreffenden Strahlung. Mittels des Signals des Detektors 24 kann nun das optische System des Suchkopfs 6 überprüft und durch Einstellung der optischen Elemente 20 zueinander optimiert werden. Es kann überprüft werden, ob die Transmission des optischen Systems korrekt ist oder ob Frequenzbereiche zu stark absorbiert werden. Hierdurch ist eine Gesamtprüfung des optischen Systems inklusive Detektor 24 des Suchkopfs 6 möglich.

Zur Prüfung oder Messung beziehungsweise Kalibrierung wird die kollimierte Strahlung auf den Suchkopf 6 geleitet. Dann wird die Signalstärke des Detektors 24 in Abhängigkeit von der eingestellten Zentralwellenlänge des Filterbands der externen Messeinrichtung 30 gemessen. Durch einen Korrekturschritt, in dem das gemessene Signal mit der tatsächlichen Leistung der einfallenden Strahlung korreliert wird, erhält man die spektrale Antwortcharakteristik des gesamten optischen Systems aus Eingangsfenster 22 und Suchkopfoptik 16 inklusive Detektor 24. Hiermit können die spektralen Eigenschaften des Suchkopfs 6 vermessen und bei späteren Flugmessungen zur Kalibrierung verwendet werden. Weiter wird eine bereichsweise Messung der Point-Spread-Funktion durchgeführt, die auch als Messung der Auflösung des optischen Systems bezeichnet werden kann. Hierfür wird die scharfe Abbildung der Infrarotlichtquelle 32 auf der sensitiven Fläche des Detektors 24 sukzessive verschoben von Bereich zu Bereich und in jedem Bereich wird die Größe, Geometrie und Intensität des Detektorsignals gemessen. Größe und Geometrie werden mit der realen Größe und Geometrie der Infrarotlichtquelle 32 in Beziehung gesetzt, sodass Abbildungsfehler erkannt und - nach eventueller Optimierung des optischen Systems - in die Kalibrierung mit einbezogen werden können. Auch die Intensität des Signals in Abhängigkeit vom Ort der Messung - die Intensität des Signals kann regional verschieden sein auf der beleuchteten Fläche des Detektors 24, auch wenn die Leistung der LED über ihre Leuchtfläche gleichmäßig ist - wird gemessen, sodass auch diese Funktion in die Kalibrierung mit aufgenommen werden kann.

### Bezugszeichenliste

- 2: Fluggerät
- 4: Ziel
- 6: Suchkopf
- 8: Steuereinheit
- 10: Wirkkörper
- 12: Antrieb
- 14: Lenkelement
- 16: Suchkopfoptik
- 18: Fangspiegel
- 20: Element
- 22: Eingangsfenster
- 24: Detektor
- 26: Kühler
- 28: Auswerteeinheit
- 30: Messeinrichtung
- 32: Infrarotlichtquelle
- 34: Spektralfilter
- 36: Strahlformoptik
- 38: Einkoppeloptik
- 40: Suchkopfmesssystem
- 41: Strahlengangbereich
- 42: Verdunkeler
- 44: Suchkopfmesssystem
- 45: Zwischenbildebene
- 46: Suchkopfmesssystem
- 47: Messstand
- 48: Kollimator
- 50: Infrarotdetektor
- 52: Spiegel

## Patentansprüche

1. Suchkopfmesssystem (40, 44, 46) mit einem Suchkopf (6) für ein Fluggerät (2) zur Erkennung von Zielen (4), der einen Detektor (24), eine Suchkopfoptik (16) zur Lenkung von durch ein Eingangsfenster (22) einfallender Infrarotstrahlung auf den Detektor (24) und eine Auswerteeinheit (28) zur Erkennung der Ziele (4) aus Detektordaten umfasst,
**gekennzeichnet**
**durch** eine Infrarotlichtquelle (32), eine Einkoppeloptik (38) zum Einkoppeln von Infrarotstrahlung aus der Infrarotlichtquelle (32) in den Strahlengang der Suchkopfoptik (16) und einen durchstimmbaren Spektralfilter (34) zum Durchstimmen der aus der Infrarotlichtquelle (32) auf den Detektor (24) geleiteten Infrarotstrahlung.

2. Suchkopfmesssystem (40, 44) nach Anspruch 1,
**dadurch gekennzeichnet,**
**dass** die Infrarotlichtquelle (32) und die Einkoppeloptik (38) im Suchkopf (6) angeordnet sind für eine Detektormessung während eines Flugs des Fluggeräts (2), wobei die Einkoppeloptik (38) einen Einkoppelspiegel aufweist, der bei einer Bestrahlung des Detektors (24) mit der Strahlung den Strahlengang von außen zum Detektor (24) unterbricht.

3. Suchkopfmesssystem (46) nach Anspruch 1 oder 2,
**dadurch gekennzeichnet,**
**dass** die Infrarotlichtquelle (32) und die Einkoppeloptik (38) außerhalb des Suchkopfs (6) angeordnet sind zum Einkoppeln der Strahlung vor dem Eingangsfenster (22) in den Strahlengang.

4. Suchkopfmesssystem (40, 44, 46) nach einem der vorhergehenden Ansprüche, **dadurch gekennzeichnet,**
**dass** der Spektralfilter (34) ein spektral durchstimmbarer Fabry-Perot-Filter ist.

5. Suchkopfmesssystem (40, 44, 46) nach einem der vorhergehenden Ansprüche, **dadurch gekennzeichnet,**
**dass** die Infrarotlichtquelle (32) eine Interbandkaskaden-LED ist.

6. Suchkopfmesssystem (46) nach einem der vorhergehenden Ansprüche,
**dadurch gekennzeichnet,**
**dass** ein zum Detektor (24) zusätzlicher, kalibrierter Infrarotdetektor (50) im Strahlengang vor der Suchkopfoptik (16) angeordnet ist.

7. Suchkopfmesssystem (40) nach einem der vorhergehenden Ansprüche,
**dadurch gekennzeichnet,**
**dass** die Infrarotlichtquelle (32), die Einkoppeloptik (38) und der Strahlengang so zueinander angeordnet sind, dass die Infrarotlichtquelle (32) unkollimiert in einen kollimierten Strahlengangbereich (41) einstrahlt.

8. Suchkopfmesssystem (44) nach einem der vorhergehenden Ansprüche,
**dadurch gekennzeichnet,**
**dass** die Einkoppeloptik (38) so zum Eingangsfenster (22) beweglich angeordnet ist, dass der Detektor (24) bereichsweise selektiv bestrahlbar ist.

9. Messverfahren zur optischen Vermessung eines Suchkopfs (6) für ein Fluggerät (2) zur Erkennung von Zielen (4), bei dem Infrarotstrahlung aus einer Infrarotlichtquelle (32) durch eine Einkoppeloptik (38) in den Strahlengang einer Suchkopfoptik (16) eingekoppelt und auf einen Detektor (24) gelenkt wird und eine Auswerteeinheit (28) Detektordaten auswertet,
**dadurch gekennzeichnet,**
**dass** die Infrarotstrahlung mit einem durchstimmbaren Spektralfilter (34) in seiner Frequenz durchgestimmt wird und die Detektordaten in Abhängigkeit von der Frequenz ausgewertet werden.

10. Messverfahren nach Anspruch 9,
**dadurch gekennzeichnet,**
**dass** während des Flugs des Fluggeräts (2) eine Empfindlichkeit des Detektors (24) in Abhängigkeit von der durch die Infrarotlichtquelle (32) eingestrahlten Frequenz ermittelt wird.

11. Messverfahren nach Anspruch 10,
**dadurch gekennzeichnet,**
**dass** die Messung wiederholt wird und sich Messung und Erkennung eines Ziels (4) abwechseln und die Erkennung des Ziels (4) unter Verwendung der Messdaten der jeweils letzten Messung erfolgt.

12. Messverfahren nach einem der Ansprüche 9 bis 11,
**dadurch gekennzeichnet,**
**dass** die Infrarotlichtquelle (32) die gesamte empfindliche Fläche des Detektors (24) durch die Suchkopfoptik (16) beleuchtet.

13. Messverfahren nach einem der Ansprüche 9 bis 12,
**dadurch gekennzeichnet,**
**dass** der Suchkopf (6) ein zumindest bispektraler Suchkopf (6) mit zwei Spektralbereichen ist und die Auswerteeinheit (28) beide Spektralbereiche in Abhängigkeit von einer in beiden Spektralbereichen ermittelten Empfindlichkeit des Detektors (24) getrennt auswertet.

14. Messverfahren nach einem der Ansprüche 9 bis 13,
**dadurch gekennzeichnet,**
**dass** die Infrarotlichtquelle (32) scharf auf den Detektor (24) abgebildet wird.

15. Messverfahren nach einem der Ansprüche 9 bis 14,
**dadurch gekennzeichnet,**
**dass** der Detektor (24) durch Bewegung der Einkoppeloptik (38) in mehreren verschiedenen Bereichen selektiv bestrahlt wird und anhand der Detektordaten eine Auflösung des Detektors (24) ermittelt wird.
